# EUROPÄISCHE PATENTSCHRIFT

(11) **EP 2 528 987 B1**
(45) Veröffentlichungstag und Bekanntmachung des Hinweises auf die Patenterteilung: **17.08.2016**
(21) Anmeldenummer: 11794443.9
(22) Anmeldetag: 30.11.2011
(51) Int. Cl.: G02B 26/00, H04N 9/31, C09K 11/02, H05B 33/20, H01J 29/22, C09K 11/08, F21V 9/00, H01J 9/22

(54) **HERSTELLUNG VON LEUCHTSTOFFSCHICHTEN UNTER VERWENDUNG VON ALKALISILIKATEN**
PRODUCTION OF PHOSPHOR LAYERS USING ALKALI METAL SILICATES
PRODUCTION DE COUCHES LUMINESCENTES EN UTILISANT DES SILICATES ALCALINS

(30) Priorität: 21.12.2010 DE 102010063756
(43) Veröffentlichungstag der Anmeldung: 05.12.2012
(73) Patentinhaber: OSRAM GmbH, 80807 München (DE)
(72) Erfinder: GLEITSMANN, Tobias, 14552 Michendorf (DE)
(86) Internationale Anmeldenummer: PCT/EP2011/071401
(87) Internationale Veröffentlichungsnummer: WO 2012/084440

(56) Entgegenhaltungen:
- WO-A1-02/090464
- WO-A1-2008/041363
- CN-U- 202 025 182
- US-A- 3 416 940
- US-A- 3 681 222
- US-A- 3 763 051
- US-A- 5 744 907
- US-A1- 2003 124 247
- US-A1- 2008 049 345
- YOKOYAMA MEISO ET AL: "Red SrTiO3:Pr,Al phosphor as potential field emission display material", JOURNAL OF VACUUM SCIENCE AND TECHNOLOGY: PART A, AVS /AIP, MELVILLE, NY., US, Bd. 18, Nr. 5, 1. September 2000 (2000-09-01), Seiten 2472-2476, XP012005332, ISSN: 0734-2101, DOI: 10.1116/1.1288197
- YANG SU-HUA ET AL: "Blue CuxS coated ZnS:Ag,Cl phosphor as potential field emission display material", JOURNAL OF VACUUM SCIENCE AND TECHNOLOGY: PART A, AVS /AIP, MELVILLE, NY., US, Bd. 16, Nr. 6, 1. November 1998 (1998-11-01), Seiten 3443-3448, XP012004308, ISSN: 0734-2101, DOI: 10.1116/1.581500

## Beschreibung

### Gebiet der Erfindung

Die vorliegende Erfindung betrifft ein Farbrad mit einer Leuchtstoffschicht unter Verwendung einer Suspension von mindestens einem festen Leuchtstoff in einer flüssigen Alkalisilikat-Wasser Mischung.

### Hintergrund der Erfindung

Für Remote-Phosporanwendungen, d.h. Anwendungen bei denen Leuchtstoff (Phosphor) und Lichtquelle, z.B. LED, Laser oder Laserdiode, räumlich getrennt sind, werden dünne Leuchtstoffschichten auf Oberflächen aufgebracht (Substrat), mit Bindemitteln mechanisch fixiert und an ein optisches System (Linsen, Kollimatoren, etc.) angebunden (Luft, Immersion etc.).

Die Verwendung von Bindemitteln ist notwendig, da die Leuchtstoffe, die zumeist pulverförmig vorliegen, ohne die zusätzliche Verwendung von Bindemitteln keine mechanisch stabilen Schichten, d.h. abrieb- und kratzfeste Schichten, bilden.

Problematisch bei der Verwendung von Bindemitteln zu Schichtbildung bzw. -stabilisierung ist, dass diese Bindemittel mit den Leuchtstoffen in Wechselwirkung treten und damit optische und thermische Eigenschaften negativ beeinflussen können. Zudem müssen die Bindemittel selbst thermisch und optisch stabil sein und keine Alterungseigenschaften zeigen. Aus diesem Grund ist die Verwendung eines inerten, optisch transparenten, thermisch und optisch stabilen Bindemittels Voraussetzung für die Erzeugung stabiler und langlebigere Leuchtstoffschichten.

Die Leuchtstoffe werden mit Lichtquellen, z.B. blaue Diodenlaser, hoher Leistungsdichte (einige W/mm²) zur Emission angeregt. Der Leuchtstoffbereich mag einen oder mehrere Leuchtstoffe aufweisen, welche in der Lage sind, einfallendes Laserlicht oder Anregungslicht in Wellenlängen umgewandeltes bzw. konvertiertes Licht zumindest teilweise umzuwandeln. Die bei der Konversion entstehenden hohen thermischen Verluste (Stokes) führen zu einem Wärmeeintrag in der Leuchtstoffschicht. Werden diese Temperaturen zu hoch, beispielsweise durch unzureichende Entwärmung, kann es zu thermisch bedingten Änderungen der optischen Eigenschaften (Emissionswellenlänge, Konversionseffizienz, thermisches Quenchen usw.) kommen oder letztendlich zu der Zerstörung der Leuchtstoffe bzw. der Schicht selbst. Ursächlich für diese Degeneration der Leuchtstoffschicht können sowohl Leuchtstoff als auch Bindemittel sein. Aus diesem Grund sollte die Leuchtstoffschicht so gestaltet sein, das sie optimal entwärmt werden kann, um die thermische Zerstörung der Leuchtstoffe und des Bindemittels zu vermeiden.

Gegenwärtig werden Silikone als Bindermatrizen für lichttechnische Anregung (z.B. LEDs) verwendet. Diese erlauben keine zu hohen Lichtleistungen (Leistungsdichten einige W/mm²) oder machen weiteren technologischen Aufwand nötig (z.B. phosphorbeschichtete rotierende Farbräder zur Reduzierung der Lichteinwirkzeit).

Der Beschichtungsprozess wird durch die Art der Substratmaterialien limitiert. So sind Hochtemperaturprozesse auf vielen Kunststoffen und metallischen Materialien (z.B. Aluminium) aufgrund deren Schmelztemperaturen nicht denkbar. Alternativ verfügbare gut wärmeleitfähige keramische Materialien (z.B. AlN) sind dagegen mit erhöhtem technologischem und finanziellen Aufwand verbunden. Die bekannten Leuchtstoff-Silikongemische werden üblicherweise direkt auf metallische Substrate aufgebracht. Diese metallischen Substrate können zusätzlich eine Kühlfunktion besitzen.

Das Dokument YOKOYAMA MEISO ET AL: "Red SrTiO3:Pr,AL phosphor as potential field emission display material" Journal of Vaccum Science and Technology: Part A, AVS / AIP, Melville, NY., US, Bd. 18, Nr. 5, 1. September 2000, S. 2472-2476, offenbart ein Verfahren zur Herstellung von Leuchtstoffschichten. Dabei wird eine Suspension aus Wasser, einem Leuchtstoff, einem Silikat und Wasser auf ein Substrat aus ITO Glas aufgebracht.

Anschließend wird die Leuchtstoffschicht durch Trocknung bei Raumtemperatur bzw. 60-70 °C ausgehärtet.

Das Dokument US 2008/049345 A1 offenbart ein Farbrad mit Farbfiltern zur Filterung des weißen Lichts einer Lampe in farbiges Licht für die Farbbildprojektion.

Aufgabe der vorliegenden Erfindung ist es daher ein Farbrad mit einer mechanisch und thermisch stabilen Leuchtstoffschicht bereitzustellen.

### Zusammenfassung der Erfindung

Die erfindungsgemäße Aufgabe wird gelöst durch:
ein Farbrad, auf das eine Leuchtstoffschicht aufgebracht ist, wobei die Leuchtstoffschicht gemäß einem Verfahren erzeugt wurde, das folgende Verfahrensschritte umfasst:
   - Aufbringen einer Suspension enthaltend mindestens einen festen Leuchtstoff und mindestens ein Alkalisilikat auf eine Substratoberfläche oder in eine Form um eine Leuchtstoffschicht oder einen Leuchtstoffkörper zu erzeugen;
   - Aushärten der Leuchtstoffschicht oder des Leuchtstoffkörpers;
wobei die Leuchtstoffschicht zum Zweck der Kühlung mit einer Oberflächenstruktur versehen ist und wobei die Oberflächenstruktur der Leuchtstoffschicht die Form von Lamellen hat.

### Beschreibung der Zeichnungen

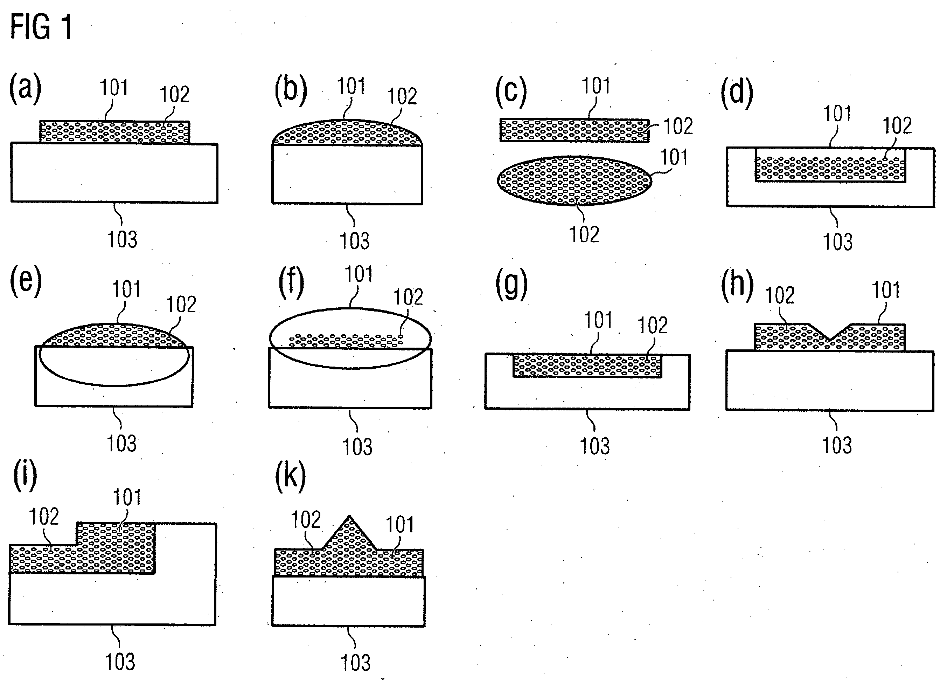

Figur 1 zeigt verschiedene Varianten zur Form der Alkalisilikat-Schicht Leuchtstoffschicht (101) oder des Leuchtstoffkörper (101) sowie zur Art und Form des Substrats (103) ((a)-(k)). In den Figuren 1a) und 1d) bis 1k) ist das Substrat (103) optisch dicht, in der Figur 1b) optisch transparent. Ebenfalls dargestellt sind Varianten der Verteilung der Leuchtstoffpartikel (102) innerhalb der Alkalisilikat-Leuchtstoffschicht (101) ((d)-(g)).

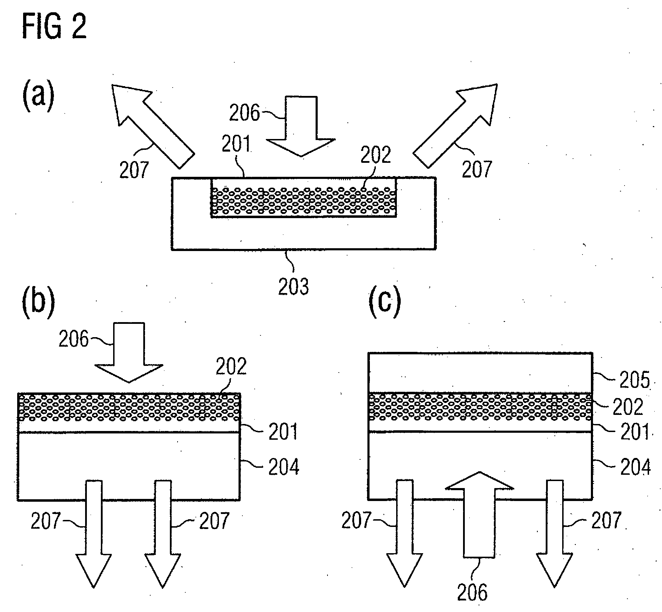

Figur 2 zeigt den Einsatz der Leuchtstoffschichten (201) bei Reflexions- (a) und Transmissions-Anwendungen (b) sowie ein Beispiel, in dem die Leuchtstoffschicht (201) reflexiv eingesetzt wird und direkt zwischen optisch dichtem Kühlkörper (205) und transparentem optischen Bauteil (204) angebunden ist (c). Das Anregungslicht ist als breiter Pfeil (206), das emittierte Licht als schmale Pfeile (207) dargestellt. Das Substrat (203) ist in Figur 2a) optisch dicht, in der Figur 2b) opisch transparent. In der Figur 2c) ist das obere Substrat (205) optisch dicht, das untere Substrat (204) optisch transparent.

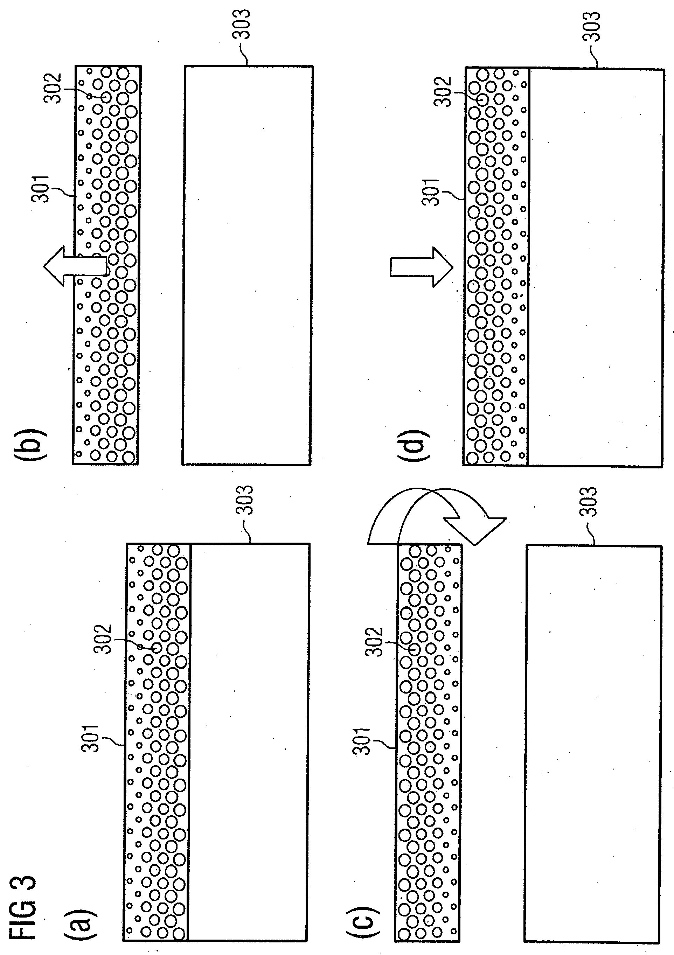

Figur 3 zeigt schematisch eine Leuchtstoffschicht (301) mit einer Verteilung von Partikeln (302) (a), die vom darunter liegenden Substrat (303) abgelöst (b), um 180° gedreht (c) und wieder auf die Substratoberfläche geklebt (d) wird. Dadurch lässt sich ein optisches Bauteil herstellen, in dem die größeren Leuchtstoffpartikel an der Schichtoberfläche liegen. Das Substrat (303) ist in den Figuren 3a) bis 3d) optisch dicht.

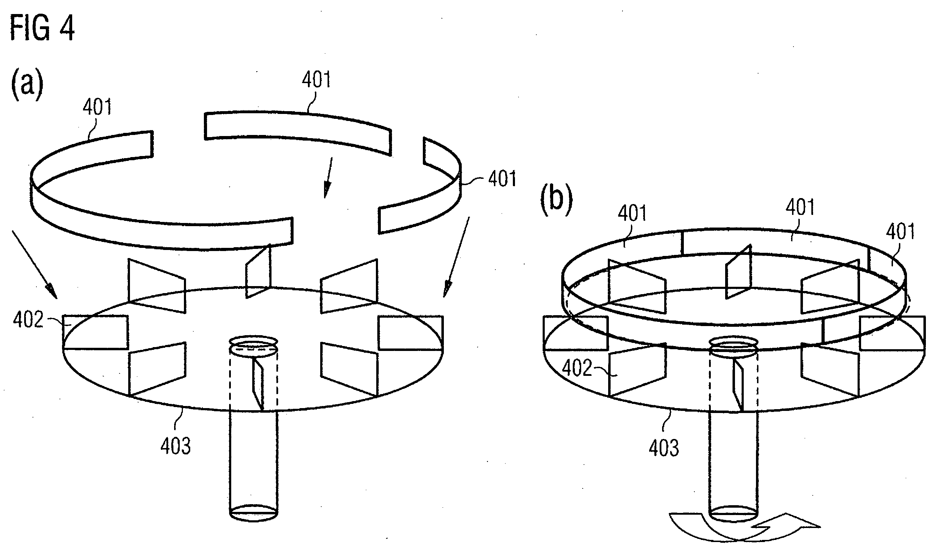

Figur 4 zeigt schematisch ein Beispiel in dem mehrere substratlose Leuchtstoffschichten als Farbradsegemente (401) auf Lüfterstege (402) aufgesetzt werden um entsprechend dem Radiallüfterprinzip eine aktive Kühlung zu erreichen.

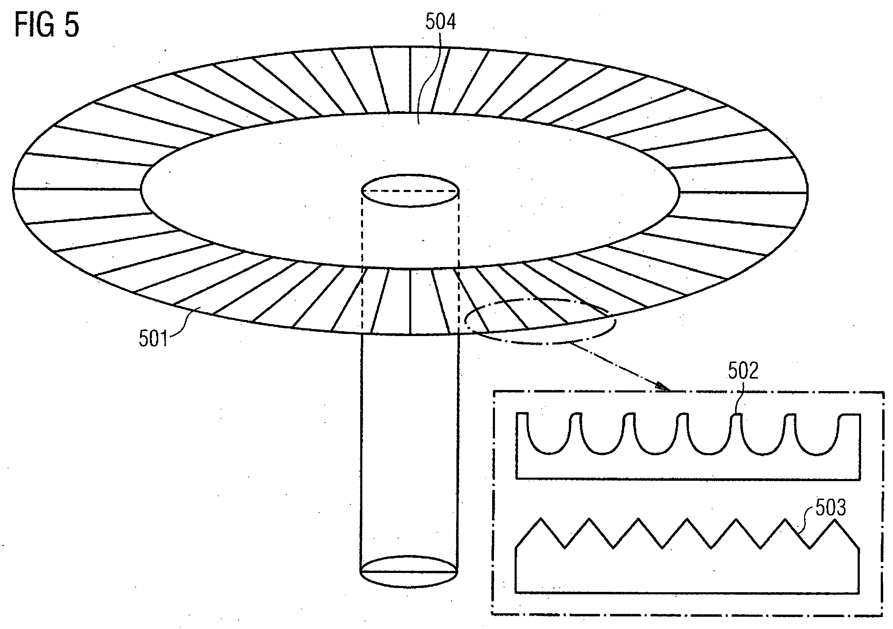

Figur 5 zeigt schematisch ein Beispiel für eine Ausführungsform in der die Leuchtstoffschicht (501) auf einem Färbrad (504) eingesetzt und durch Oberflächenstrukturen in der Leuchtstoffschicht aktiv gekühlt werden kann. Als Oberflächenstrukturen sind beispielhaft als Alternativen Riefen (502) und Lamellen (503) dargestellt.

### Detaillierte Beschreibung der Erfindung

Die vorliegende Erfindung basiert auf der Erkenntnis, dass sich Suspensionen von festen Leuchtstoffpartikeln in flüssigen wässrigen Alkalisilikatlösungen dazu eignen mechanisch stabile, harte Leuchtstoffschichten auszubilden, die gleichzeitig sehr gute optische Eigenschaften aufweisen.

Die Erfindung betrifft ein Farbrad (504), auf das eine Leuchtstoffschicht (501) aufgebracht wird bzw. direkt auf der Farbradoberfläche als Substrat erzeugt wird, wobei die Leuchtstoffschicht zum Zweck der Kühlung mit einer Oberflächenstruktur versehen ist. Die Oberflächenstruktur kann die Form von Riefen (502) oder Lamellen (503) annehmen. Schematisch ist ein solches Farbrad in Fig. 5 dargestellt.

Das Verfahren zur Herstellung der Leuchtstoffschicht umfasst die Schritte:
- Aufbringen einer Suspension enthaltend mindestens einen festen Leuchtstoff und mindestens ein Alkalisilikat auf eine Substratoberfläche oder in eine Form, um eine Leuchtstoffschicht oder einen Leuchtstoffkörper zu erzeugen;
- Aushärten der Leuchtstoffschicht oder des Leuchtstoffkörpers.

In verschiedenen Varianten ist die Suspension eine wässrige Suspension und enthält eine Mischung aus Wasser und mindestens einem flüssigen Alkalisilikat. Das Verfahren kann ferner auch den Schritt der Herstellung einer geeigneten Suspension durch Suspendieren des festen Leuchtstoffs in einer flüssigen Alkalisilikat-haltigen Lösung umfassen.

Für die Herstellung der Suspension können die Leuchtstoffpulver mit flüssigem wässrigen Alkalisilkat angemischt werden. Dabei hat das Verhältnis der Volumina Alkaliwasserglasanteil, Wasser und Feststoffpulver direkten Einfluss auf die Homogenität der Suspension (Verarbeitbarkeit), die Viskosität, die resultierende Schichtdicke, die Rissneigung, das Trocknungsverhalten und die optischen Eigenschaften der resultierendnen Schicht (späterer Glasanteil).

Es hat sich als vorteilhaft herausgestellt, wenn das Volumenkonzentrationsverhältnis von flüssigem Alkalisilikat und Wasser in solchen Mischungen von ungefähr 1:5 bis ungefähr 5:1, vorzugsweise von ungefähr 1:3 bis 3:1 beträgt. In bestimmten Ausführungsformen der Erfindung beträgt das Volumenkonzentrationsverhältnis von flüssigem Alkalisilikat(en) und Wasser daher 1:3, 1:2, 2:3, 1:1, 2:1, 3:2, oder 3:1. Das eingesetzte Verhältnis kann in Abhängigkeit von den Zieleigenschaften der Farbstoffschicht (z.B.Glasanteil, Schichtdicke, Festigkeit), sowie von den Leuchtstoffen selbst gewählt werden. Ein Anteil reinen Alkalisilikates über dem oben genannten Konzentrationsbereich führt zum Aufschäumen der Schicht beim beim Trocknen bzw. Ausheizen. "Ungefähr" bedeutet im Zusammenhang dieser Erfindung, dass der entsprechende Zahlenwert um etwa 10% nach oben oder unten abweichen kann. In einer Variante handelt es sich bei dem flüssigen Alkalisilikat um eine gesättigte Lösung von Alkalisilikat in Wasser, die dann in oben genanntem Verhältnis weiter mit Wasser verdünnt wird. Eine solche gesättigte Lösung kann beispielsweise 7.5-8.5 Gew.-% Alkalioxid, z.B. Na₂O, und 25.5 -28.5 Gew.-% SiO₂ (jeweils acidimetrisch bestimmt) enthalten. Eine solche Lösung kann eine Dichte von etwa 1,296 bis etwa 1,396 g/ml besitzen.

Bei dem mindestens einen Alkalisilikat kann es sich beispielsweise um Natriumsilikat oder Kaliumsilikat handeln. Ebenfalls erfasst sind Mischungen der vorgenannten Alkalisilikate. Bei den Alkalisilikaten handelt es sich um Verbindungen der allgemeinen Formal M₂O · n SiO₂, wobei M ein Alkalimetall und n im Bereich von 1-4 ist. Die Alkalisilikate können als kolloide, alkalische Lösungen in Wasser, insbesondere Natrium-/Kaliumsilikat Lösungen, eingesetzt werden. Solche wässrigen Lösungen können durch Lösen der festen Alkalisilikate in Wasser bei erhöhter Temperatur und erhöhtem Druck hergestellt werden.

Bei dem mindestens einen festen Leuchtstoff kann es sich auch um eine Mischung aus zwei oder mehr verschiedenen Leuchtstoffen handeln. Im Zusammenhang mit der vorliegenden Erfindung bedeutet der Begriff "mindestens ein", 1 oder mehr, insbesondere mindestens 2, 3, 4, 5, 6, 7, 8, 9 10 oder mehr. Die Suspension kann daher auch 2 oder mehr, beispielsweise 2, 3 oder 4 verschiedene Leuchtstoffe enthalten. Üblicherweise wird der feste Leuchtstoff als Pulver eingesetzt. Die Suspension kann beispielsweise dadurch hergestellt werden, dass der feste Leuchtstoff zu einer Mischung aus Wasser und Alkalisilikat gegeben wird. Geeignete Leuchtstoffe sind im Stand der Technik bekannt. Übliche Leuchtstoffe sind beispielsweise Silikate, Nitride, Oxide, Phosphate, Borate, Oxynitride, Sulfide, Selenide, und Halide von Aluminium, Silizium, Magnesium, Calcium, Barium, Strontium, Zink, Cadmium, Mangan, Indium, anderen Übergangsmetallen, oder Seltenerdmetallen wie Yttrium, Gadolinium oder Lanthan, die mit einem Aktivator, wie zum Beispiel Kupfer, Silber, Aluminium, Mangan, Zink, Zinn, Blei, Cer, Terbium, Titan, Antimon oder Europium dotiert sind. Der Leuchtstoff kann ein oxidischer oder (oxi-)nitridischer Leuchtstoff, wie ein Granat, Orthosilikat, Nitrido(alumo)silikat oder Nitridoorthosilikat, oder ein Halogenid oder Halophosphat sein. Konkrete Beispiele für geeignete Leuchtstoffe sind Strontiumchloroapatit:Eu ((Sr,Ca)₅(PO₄)₃Cl:Eu; SCAP), Yttrium-Aluminium-Grant:Cer (YAG:Ce) oder CaAlSiN₃:Eu.

In verschiedenen Varianten beträgt das Massenverhältnis von Leuchtstoff bzw. Leuchtstoffmischung zu dem wässrigen, flüssigen Alkalisilikat, d.h. der Mischung aus Alkalisilikat und Wasser, daher von ungefähr 1:5 bis ungefähr 5:1, vorzugsweise von ungefähr 1:3 bis 3:1. Beispielhafte Konzentrationsverhältnisse sind daher 3:1, 2:1, 3:2, 1:1, 2:3, 1:2 oder 1:3. Diese Konzentrationsverhältnisse haben sich im Hinblick auf die Homogenität der Suspension, Sedimentationszeit und Schichtdicke als besonders günstig verarbeitbar herausgestellt

Die Suspension kann ferner weitere Bestandteile, beispielsweise Partikel mit lichtstreuenden Eigenschaften und/oder Hilfsstoffe enthalten. Beispiele für Hilfsstoffe schließen Tenside und organische Lösungsmittel ein. Beispiele für lichtstreuende Partikel sind Gold-, Silber- und Metalloxidpartikel.

Das Aufbringen der Suspension kann auf eine Oberfläche oder das Einbringen in eine Form durch Schlämmen, Drucken, Sprühen oder Einspritzen erfolgen. Zum Erzeugen einer Leuchtstoffschicht kann das Aufbringen ferner Spinning und/oder eine Ultraschallbehandlung beinhalten.

Das Substrat auf das die Leuchtstoffschicht aufgebracht wird kann aus verschiedenen geeigneten Materialien, wie z.B. Kunststoff, Glas, Keramik oder Metall bestehen.

Das Aushärten der Leuchtstoffschicht kann durch Trocknen erfolgen. Das Aushärten oder Trocknen kann bei Raumtemperatur oder bei erhöhter Temperatur, beispielsweise 80 - 150 °C erfolgen. Es können auch verschiedene Aushärtungs-/Trocknungsschritte bei unterschiedlichen Temperaturen miteinander kombiniert werden. Auf einen Trocknungsschritt bei Raumtemperatur kann ein weiterer Trocknungsschritt bei erhöhter Temperatur, beispielsweise 80 bis 150 °C, folgen. Das Aushärten/Trocknen bei erhöhter Temperatur kann beispielsweise in einem Ofen erfolgen. Alternativ kann das Substrat und/oder die Leuchtstoffschicht mittels Mikrowellen oder Induktionstechniken erwärmt werden.

Abhängig von dem verwendeten Leuchtstoff kann die Aushärtung/Trocknung auch unter Schutzgas (z.B. N₂ oder Ar) oder im Vakuum erfolgen. Dadurch lässt sich eine Inaktivierung des Leuchtstoffs durch die Einwirkung von Sauerstoff bei erhöhter Temperatur vermeiden.

Eine Leuchtstoffschicht lässt sich beispielsweise durch Herstellen einer Suspension von YAG:Ce als Leuchtstoff in einer flüssigen Alkalisilikat-Wasser Mischung (1:1) in einem Verhältnis von Leuchtstoff zu Alkalisilikat-Wasser-Mischung von 1:3, Aufbringen auf ein Substrat, Trocknen bei Raumtemperatur für 15-30 Minuten, und Aushärten in einem Ofen für etwa 1 h bei 80° C und danach für etwa 1 h bei 220° erhalten.

Eine andere Leuchtstoffschicht lässt sich beispielsweise durch Herstellen einer Suspension von einem Nitridoorthosilikat als Leuchtstoff in einer flüssigen Alkalisilikat-Wasser Mischung (1:1) in einem Verhältnis von Leuchtstoff zu Alkalisilikat-Wasser-Mischung von 2:3, Aufbringen auf ein Substrat, Trocknen bei Raumtemperatur für 15-30 Minuten, und Aushärten in einem Ofen für etwa 1 h bei 80° C und danach für 2-3 h bei 150° C erhalten.

Mit dem Verfahren der Bindung von Leuchtstoffen unter Verwendung von Alkalisilikaten lassen sich sehr harte, mechanisch stabile Leuchtstoffschichten erzeugen, deren Binder bei vielen Leuchtstoffen im Bereich ihrer Arbeitstemperatur nicht mit den Leuchtstoffen wechselwirkt, optisch transparent, spektral und thermisch stabil ist. Es lassen sich damit sowohl dünne Leuchtstoffschichten auf Substratoberflächen mit Schichtdicken zwischen 50-200µm fertigen, als auch ungebundene Leuchtstoffplättchen oder dreidimensionale Körper (optische Bauteile) größerer Ausdehnung (einige mm). Mögliche Varianten mit unterschiedlicher Form der Leuchtstoffschicht (101) und/oder des Substrats (103) sowie Verteilung der Leuchtstoffpartikel (102) sind in Fig.1 dargestellt.

Entsprechend der Ausführung der Schichten (Schichtdicke, Glasanteil) können die Leuchtstoffschichten (201) mit Leuchtstoffpartikeln (202) in Transmission mit transparentem Substrat (204) oder in Reflexion mit optisch dichtem Substrat (203) verwendet werden wie in Fig.2 dargestellt. Fig. 2 zeigt ferner eine Variante in der die Leuchtstoffschicht (201) zwischen einem transparenten Bauteil (204), beispielsweise einem optischen Bauteil, und einem Kühlkörper (205) direkt an die Optik anbgebunden ist.

Um die Konversion von Anregungslicht in emittiertes Licht möglichst effizient zu gestalten, muss der Streulichtanteil des Anregungslichtes möglichst minimiert werden. Dies kann beispielsweise durch Lichtankopplung an möglichst grosse Leuchtstoffpartikel geschehen. Prinzipiell können durch entsprechende Verarbeitungsprozesse (mahlen) die Partikelgrößen der Leuchtstoffe in einem gewissen Bereich eingestellt und selektiert werden. Praktisch liegen allerdings immer Korngrößenverteilungen vor. Innerhalb von Suspensionen sedimentieren die größeren und schwereren Partikel zuerst, die kleineren und leichteren später, so dass sich nach einer gewissen Zeit (u.a. abhängig von Viskosität der Flüssigkeit und Partikelgrößen) eine Schwerkraft getriebene Partikelgrößenverteilung einstellt (kleine Partikel an der oberen Schichtoberfläche, größere Partikel unten). Die wässrige Alkalisilikatlösung kann beispielsweise dahingehend ausgenutzt werden, dass während des Aufbringens und Aushärtens durch einmalige oder wiederholte Drehung des Substrates eine Partikelgrößenverteilung eingestellt wird. Alternativ oder zusätzlich kann die Partikelgrößenverteilung mit einer Zentrifuge eingestellt werden. Die Leuchtstoffschicht (301) mit den Leuchtstoffpartikeln (302) kann dann nach dem Trocknen und Ausheizen vom Trägermedium (303) abgelöst, um 180° gedreht und mit der optisch günstigeren gröberen Kornverteilung nach oben wieder auf ein Substrat (303) aufgebracht werden, z.B. durch Verkleben mit Alkalisilkat. Ein solches Verfahren ist schematisch in Figur 3 dargestellt.

Alternativ kann die Partikelverteilung durch eine Ultraschallbehandlung beeinflusst werden. Dabei können beispielsweise mittels Ultraschall gröbere Leuchtstoffpartikel an die Schichtoberfläche gerüttelt werden.

In noch einem weiteren Aspekt umfasst die Suspension mindestens ein flüssiges wässriges Alkalisilikat und einen oder mehrere feste Leuchtstoffe. Das Volumenkonzentrationsverhältnis von flüssigem Alkalisilikat sowie das Massenverhältnis von flüssiger Alkalisilikat-Wasser-Mischung und Leuchtstoff(mischung) können dabei wie oben im Zusammenhang mit dem Verfahren angegeben sein. Alkalisilikat und Leuchtstoff können dabei ebenfalls wie oben definiert sein.

Die Suspension kann ferner weitere Bestandteile, wie beispielsweise Partikel mit lichtstreuenden Eigenschaften oder Hilfsstoffe enthalten. Die mit dem Verfahren oder der Suspension hergestellten Leuchtstoffschichten können in vorteilhafter Weise in Lampen oder LEDs, insbesondere in sogenannten Remote Phosphor Anwendungen bei denen der Leuchtstoff von der Anregungslichtquelle räumlich getrennt ist, eingesetzt werden.

Die Leuchtstoffschichten sind durch die Verwendung von Alkalisilikat als thermisch, chemisch inertes und spektral stabiles Bindemittel, mechanisch und thermisch sehr stabil und können die Leistungsdichten des Anregungslichtes erhöhen.

Ferner zeichnen sich die Leuchtstoffschichten durch gute optische Eigenschaften aus.

Die Verwendung von Alkalisilikat als Bindemittel ermöglicht darüber hinaus eine Verbesserung der optischen Anbindung an die Umgebung , da durch die Formung der Leuchtstoffschicht (z.B. bei der Herstellung durch die Verwendung von Formen oder nachträglich mechanische Bearbeitung) Lichtein- oder auskopplung bzw. Abstrahlcharakteristik (Linseneffekt) beeinflusst werden können.

Die mittels des Verfahrens hergestellten Leuchtstoffschichten können abhängig von dem Verhältnis von Alkalisilikat und Leuchtstoffanteil reflexiv oder transmissiv verwendet werden (Fig.3). Ferner ist eine direkte optische Anbindung an die optischen Elemente möglich (Fig.3).

Das Herstellungsverfahren ist vergleichsweise einfach und ist aufgrund der niedrigen Verarbeitungstemperaturen weitgehend unabähngig vom Substratmaterial (Metalle, Gläser, Keramiken, Kunstoffe).

Die geringe Viskosität der Suspensionsflüssigkeit erlaubt ferner die Beeinflussung der Korngrößenverteilung an der Leuchtstoffoberfläche, beispielsweise durch die Schwerkraft oder Ultraschall getriebene Partikelselektion (Fig.3).

Zur weiteren Verbesserung der optischen Eigenschaften der Leuchtstoffschichten können ferner Beschichtungsverfahren von optischen Gläsern angewandt werden (z.B. Antireflexbeschichtung, dichrotische oder Filterschichten).

Die hohe Härte und sehr gute mechanische Stabilität der Leuchtstoffschichten erlaubt mehr Freiheiten im Design von Leuchtstoff basierten Produkten, z.B. höhere Leistungsdichten bei der Leuchtstoffanregung und statische Varianten (Verzicht auf Farbradlösungen), die Fertigung von substratunabhängigen Leuchtstoffplättchen oder Folien, die freitragen verwendet oder nachträglich auf Substrate aufgeklebt werden können (z.B. mit Alkalisilikat, siehe auch Fig. 4), die Fertigung von dreidimensionalen Strukturen und Körpern, z. B. optische Bauteile.

Darüber hinaus sind die Leuchtstoffschichten oder Leuchtstoffkörper mechanisch nachbearbeitbar. So kann die Leuchtstoffoberfläche beispielsweise strukturiert werden, z.B. mit Löchern oder Rillen versehen werden (Fig. 1(h)), oder es kann eine gezielte Aufrauung der Oberfläche erfolgen. Das führt zu einer effektiveren Entwärmung und Reduzierung der Leistungsdichten durch Vergrößerung der Oberfläche.

Dabei sind beispielsweise freitragende Varianten zur Kühlung der Leuchtstoffunterseite (Fig.4) oder eine aktive Kühlung durch Rillen oder Flügelstrukturen in Leuchtstoffschicht (Fig. 5) denkbar.

## Patentansprüche

1. Farbrad (504), auf das eine Leuchtstoffschicht (501) aufgebracht ist, wobei die Leuchtstoffschicht (501) gemäß einem Verfahren erzeugt wurde, das folgende Verfahrensschritte umfasst:
- Aufbringen einer Suspension enthaltend mindestens einen festen Leuchtstoff und mindestens ein Alkalisilikat auf die Farbradoberfläche oder in eine Form um die Leuchtstoffschicht (501) zu erzeugen;
- Aushärten der Leuchtstoffschicht;
wobei die Leuchtstoffschicht (501) zum Zweck der Kühlung mit einer Oberflächenstruktur versehen ist und wobei die Oberflächenstruktur der Leuchtstoffschicht (501) die Form von Lamellen (503) hat.

## Claims

1. Colour wheel (504), to which a phosphor layer (501) has been applied, the phosphor layer (501) having been produced by a method which comprises the following method steps:
- applying a suspension comprising at least one solid phosphor and at least one alkali silicate to the surface of the colour wheel or into a mould to create the phosphor layer (501);
- curing the phosphor layer;
the phosphor layer (501) being provided with a surface structure for the purpose of cooling and the surface structure of the phosphor layer (501) having the form of lamellae (503).

## Revendications

1. Roue chromatique (504) sur laquelle une couche de substance luminescente (501) est appliquée, la couche de substance luminescente (501) étant produite selon un procédé qui comprend les étapes suivantes :
- application d'une suspension contenant au moins une substance luminescente solide et au moins un silicate alcalin sur la surface de la roue chromatique ou dans un moule pour produire la couche de substance luminescente (501) ;
- durcissement de la couche de substance luminescente ;
la couche de substance luminescente (501) étant pourvue, pour permettre le refroidissement, d'une structure superficielle et la structure superficielle de la couche de substance luminescente (501) ayant la forme de lamelles (503).
